# EUROPÄISCHE PATENTSCHRIFT

(11) **EP 0 556 209 B1**
(45) Veröffentlichungstag und Bekanntmachung des Hinweises auf die Patenterteilung: **04.10.1995**
(21) Anmeldenummer: 91918488.7
(22) Anmeldetag: 26.10.1991
(51) Int. Cl.: H02P 3/08

(54) **SCHALTUNGSANORDNUNG ZUR BEGRENZUNG DER ABSCHALTSPANNUNG AN EINEM STELLMOTOR**
CIRCUIT FOR LIMITING THE CUT-OFF VOLTAGE OF AN ACTUATOR MOTOR
CIRCUIT POUR LA LIMITATION DE LA TENSION DE BLOCAGE SUR UN SERVOMOTEUR

(30) Priorität: 05.11.1990 DE 4035066
(43) Veröffentlichungstag der Anmeldung: 25.08.1993
(73) Patentinhaber: ITT Automotive Europe GmbH, 60488 Frankfurt (DE)
(72) Erfinder: LORECK, Heinz, D-6270 Idstein (DE); ENGELMANN, Mario, D-6392 Neu Anspach 1 (DE)
(86) Internationale Anmeldenummer: EP9102029
(87) Internationale Veröffentlichungsnummer: WO9208274

(56) Entgegenhaltungen:
- EP-A- 0 005 079
- EP-A- 0 348 107

## Beschreibung

Die Erfindung bezieht sich auf die Klemmbeschaltung eines Stellmotors, d.h. auf eine Schaltungsanordnung zur Begrenzung der Abschaltspannung, die bei Steuerung eines Stellmotors mit Hilfe von breitenmodulierten Gleichstrompulsen auftritt.

Beim Abschalten induktiver Lasten oder Lasten mit induktivem Anteil, zu denen auch Elektromotoren zählen, treten bekanntlich Überspannungen auf, die durch den Abbau der in der induktiven Last gespeicherten Energie verursacht werden. In Gleichstromnetzen kann man die Überspannung durch eine Freilaufdiode, die zu der Last parallelgeschaltet wird und durch die Gleichspannung in Sperrichtung beaufschlagt wird, begrenzen. Diese Maßnahme versagt jedoch bei einem Gleichstrommotor, der auch als Generator betrieben werden soll, oder der durch eine mechanische Kraft ungehindert zurückgestellt werden soll.

Im vorliegenden Fall handelt es sich um den elektrischen Stellmotor für die Drosselklappe eines Kraftfahrzeugmotors. Ein solcher Stellmotor wird beispielsweise für die Steuerung oder Regelung der Motorantriebsleistung in Verbindung mit einem Antriebsschlupfregelungsystem benötigt. Der Stellmotor wird vorzugsweise über einen Leistungstransistor einund ausgeschaltet, wobei die Regelung durch breitenmodulierte Strompulse erfolgt. Zum Schutz des Endstufentransistors gegen Überspannungen, die beim Abschalten des Motors bzw. beim Sperren des Endstufentransistors während der Regelung durch breitenmodulierte Pulse entstehen, ist eine Klemmbeschaltung des Stellmotors erforderlich. Da jedoch der Stellmotor gegen eine Spannfeder wirkt und durch die Federkraft möglichst schnell in die 0-Position zurückgestellt werden soll, scheidet die Begrenzung der Abschaltspannung durch eine Freilaufdiode aus. Ein Kurzschließen der Wicklung des Stellmotors über eine solche Freilaufdiode würde nämlich dem Rücklauf des Motors entgegenwirken und dadurch eine schnelle Zurückstellung der Drosselklappe durch die Federkraft bzw. eine schnelle Positionsregelung der Drosselklappe behindern.

Der Erfindung liegt daher die Aufgabe zugrunde, eine Schaltungsanordnung zu entwickeln, mit der die beim Abschalten eines Gleichstrom-Stellmotors auftretenden Überspannungen begrenzt werden können, ohne daß dadurch das Zurückstellen des Motors behindert wird. Verlangt war eine möglichst einfache, mit geringen Kosten herzustellende Schaltungsanordnung; zustätzliche Ansteuer-Anschlüsse, zusätzliche Spannungsquellen usw. sollten vermieden werden.

Es hat sich herausgestellt, daß diese Aufgabe mit einer Schaltungsanordnung der eingangs genannten Art gelöst werden kann, deren Besonderheit darin besteht, daß dem Stellmotor eine sogenannte Freilaufdiode in Reihe mit einem Transistor parallelgeschaltet ist, der über einen Kondensator, welcher einerseits mit der Steuerelektrode des Transistors, andererseits mit demjenigen Anschluß des Stellmotors verbunden ist, an dem auch die Freilaufdiode angeschlossen ist, beim Auftreten der Abschaltspannung kurzzeitig durchgesteuert wird.

Die erfindungsmäßige Schaltungsanordnung läßt sich mit verhältnismäßig geringem Aufwand herstellen. Für die Ansteuerung des Transistors wird keine zusätzliche Spannungsquelle benötigt. Anschlüsse nach außen, z.B. zu der Steuerelektronik, sind ebenfalls nicht erforderlich.

Die Dauer der Durchsteuerung des Transistors der erfindungsgemäßen Schaltungsanordnung läßt sich durch entsprechende Bemessung eines RC-Gliedes, d.h. durch einen ohmschen Widerstand, über den sich der Kondensator entlädt, mit genügender Genauigkeit vorgeben. Weiterhin ist es zweckmäßig, dem Widerstand in Laderichtung des Kondensators eine Diode parallel zu schalten, über die bei einem erneuten Ansteuern des Motors bzw. Einschaltpuls der Kondensator schnell geladen wird.

Nach einem Ausführungsbeispiel der Erfindung ist der dem Stellmotor parallelgeschaltete Transistor ein Leistungs-MOS-FET, dessen Gate-Anschluß über den Kondensator beim Auftreten der Abschaltspannung angesteuert wird.

Nach einem weiteren Ausführungsbeispiel der Erfindung ist der Feldeffekt-Transistor (FET) durch eine den Gate-Anschluß mit dem Source-Anschluß verbindende Zenerdiode gegen Überspannungen geschützt. Zweckmäßigerweise ist die Zenerdiode derart geschaltet, daß sie in Sperrichtung zum Überspannungsschutz dient und in Durchlaßrichtung den Ladestrom des Kondensators führt. Die zuvor genannte separate Diode zur besonders schnellen Ladung des Kondensators wird damit überflüssig.

Weitere Merkmale, Vorteile und Anwendungsmöglichkeiten der Erfindung gehen aus der folgenden Beschreibung anhand der beigefügten Abbildungen hervor.

Es zeigen
- Fig. 1: ein Ausführungsbeispiel einer Schaltungsanordnung nach der Erfindung und
- Fig. 2: im Diagramm den Potentialverlauf an der Klemme K1 der Schaltunganordnung nach Fig. 1.

Das dargestellte und im folgenden beschriebene Ausführungsbeispiel der Erfindung bezieht sich auf eine Schaltungsanordnung zur Begrenzung der an dem Stellmotor M eines Antriebsschlupfregelungssystems auftretende Abschaltspannung. Mit dem Motor M wird die Lage bzw. der Drehwinkel einer (nicht gezeigten) Drosselklappe gesteuert, die wiederum die Antriebsleistung eines Kraftfahrzeugmotors bestimmt. Die Winkellage und die Verstellgeschwindigkeit der Drosselklappe wird hier mit Hilfe von breitenmodulierten Gleichstrompulsen gesteuert. Der Stellmotor M spannt eine (nicht gezeigte) Rückstellfeder, die, sobald die Stromzufuhr unterbrochen ist,die Antriebskraft zur Zurückstellung des Motors liefert.

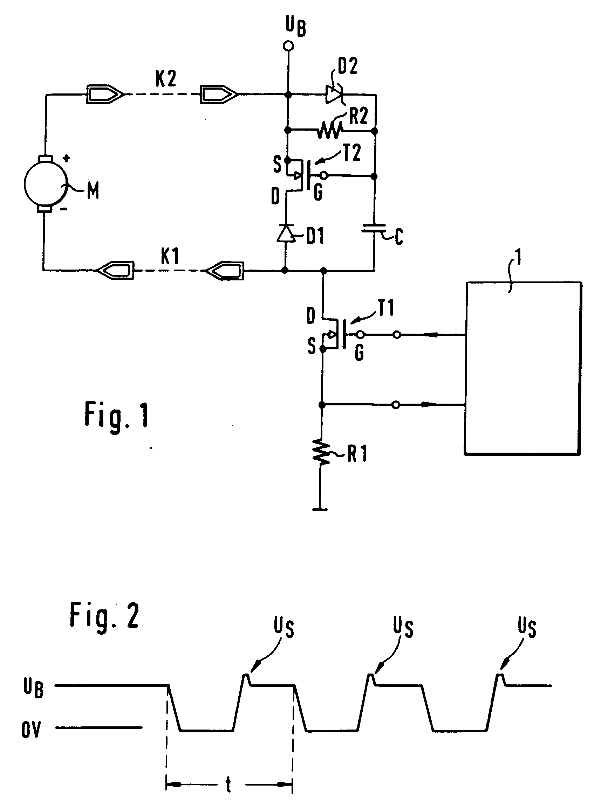

Die Stellpulse für den Motor M werden hier mit Hilfe eines Leistungstransistors T1, z.B. eines MOS-FET, erzeugt, der über eine nur angedeutete Regelelektronik 1 angesteuert wird. Der Transistor T1 wird als Schalttransistor betrieben. An der Klemme K1 liegt daher, wie Figur 2 zeigt, entweder die Batteriespannung U_{B} oder nahezu Massepotential ( 0 V), lediglich erhöht durch einen geringen Spannungsabfall, den der durch den Transistor T1 fließende Strom an einem niederohmigen Meßwiderstand R1 hervorruft. In der Darstellung der Figur 2 wurde dieser Spannungsabfall vernachlässigt.

Die erfindungsgemäße Freilaufklemmschaltung, nämlich eine Schaltungsanordnung zur Begrenzung der Abschaltspannung ist über die Anschlüsse K1, K2 mit dem Stellmotor M verbunden. Diese Klemmschaltung setzt sich im wesentlichen aus einem Transistor T2 , hier ebenfalls ein Leistungs-MOS-FET, einer Diode D1 und einigen Elementen zur Ansteuerung des Transistors T2 zusammen. Über einen Kondensator C ist der Steueranschluß G des Transistors T2 mit der Klemme K1 und mit dem Drain-Anschluß D des zu schützenden Transistors T2 verbunden. Geladen und entladen wird der Kondensator C über einen Widerstand R2 mit einer parallelgeschalteten Diode D2. Diese Diode D2 ist als Zenerdiode ausgebildet. Dadurch kann der Spannungsabfall über der Source-Gate Strecke des Transistors T2 die Durchbruchspannung der Zenerdiode D2 nicht übersteigen.

Eine Spannungsspitze U_{S} siehe Figur 2, entsteht bei jedem Sperren des Endstufentransistors T1 bzw. Abschalten der durch den Stellmotor M gegebenen induktiven Last. Diese Spannungsspitze U_{S} wird über den Kondensator C auf den Steueranschluß (Gate G) des Transistors T2 übertragen und führt zu einer Durchsteuerung des Transistors T2 . Über die Freilaufdiode D1 und über den Transistor T2 wird folglich die in dem Stellmotor M gespeicherte Energie abgebaut und dadurch die Abschaltspannung auf einen für den Steuertransistor T1 unschädlichen Wert begrenzt. Da die Periodendauer t der breitenmodulierten Pulsfolge um Größenordnungen höher gewählt werden kann als die elektromechanische Zeitkonstante einer Drosselklappenstelleinrichtung, läßt sich durch entsprechende Dimensionierung des RC-Gliedes bzw. des Widerstandes R2 und des Kondensators C die Zeitkonstante für die Durchsteuerung des Transistors T2 derart wählen, daß die Durchsteuerungszeit des Transistors T2 in jedem Fall zur Begrenzung der Abschaltspannung genügt, jedoch kurz ist im Vergleich zu der elektromechanischen Zeitkonstante der Drosselklappenstelleinrichtung.

Nach Abschaltung der breitenmodulierten Pulsfolge bewegt sich der Drosselklappenstellmotor M in seine 0-Position zurück. Hierbei entsteht an den Klemmen K1, K2 praktisch eine Gleichspannung, durch die wegen des Kondensators C die Steuerelektrode des Transistors T2 nicht angesteuert werden kann. Die Anschlüsse oder Klemmen K1, K2 des Stellmotors M sind quasi offen, so daß der Stellmotor M durch die Kraft der (nicht gezeigten) Rückstellfeder, die bei Antrieb des Stellmotors M gespannt wurde, schnell in seine 0-Position zurückgeführt werden kann.

Wie aus dem dargestellten und beschriebenen Ausführungsbeispiel hervorgeht, wird also mit einer vergleichsweise einfachen Schaltung eine wirksame Begrenzung der Abschaltspannung und damit ein wirksamer Schutz des Ansteuertransistors T1 gegen Überspannung erreicht und gleichzeitig ein Kurzschließen der Anschlußklemmen K1, K2 des Stellmotors M während der Rückstellung in die 0-Position verhindert.

## Patentansprüche

1. Schaltungsanordnung zur Begrenzung der Abschaltspannung, die bei Steuerung eines Stellmotors (M) mit Hilfe von breitenmodulierten Gleichstrompulsen auftritt, dadurch **gekennzeichnet**, daß dem Stellmotor (M) eine sogenannte Freilaufdiode (D1) in Reihe mit einem Transistor (T2) parallelgeschaltet ist, der über einen Kondensator (C), welcher einerseits mit der Steuerelektrode (G) des Transistors (T2), andererseits mit demjenigen Anschluß des Stellmotors (M) verbunden ist, an dem auch die Freilaufdiode angeschlossen ist, beim Auftreten der Abschaltspannung kurzzeitig durchgesteuert wird.

2. Schaltungsanordnung nach Anspruch 1, dadurch **gekennzeichnet**, daß die Dauer der Durchsteuerung des Transistors (T2) durch einen ohmschen Widerstand(R2), über den sich der Kondensator (C) entlädt, vorgegeben ist.

3. Schaltungsanordnung nach Anspruch 2, dadurch **gekennzeichnet**, daß dem ohmschen Widerstand (R2) eine in Laderichtung des Kondensators (C) gepolte Diode (D2) parallelgeschaltet ist.

4. Schaltungsanordnung nach einem oder mehreren der Ansprüche 1 bis 3, dadurch **gekennzeichnet**, daß der dem Stellmotor (M) parallelgeschaltete Transistor (T2) ein Leistungs-MOS-FET ist, dessen Gate-Anschluß über den Kondensator (C) beim Auftreten der Abschaltspannung (U_{S}) angesteuert wird.

5. Schaltungsanordnung nach Anspruch 4, dadurch **gekennzeichnet**, daß der Transistor (T2) durch eine den Gate-Anschluß mit dem Source-Anschluß verbindende Zenerdiode (D2) gegen Überspannungen geschützt ist.

6. Schaltungsanordnung nach Anspruch 5, dadurch **gekennzeichnet**, daß die Zenerdiode (D2) derart geschaltet ist, daß sie in Sperrichtung zum Überspannungsschutz dient und in Durchlaßrichtung den Ladestrom des Kondensators (C) führt.

## Claims

1. A circuit configuration for limiting the cutoff voltage occurring in controlling a servomotor (M) by means of width-modulated direct-current pulses,
**characterized** in that a so-called free-wheel diode (D1) is connected in series with a transistor (T2) and in parallel with the servomotor (M), the transistor being connected through for a short time upon the appearance of the cutoff voltage by way of a capacitor (C) which, on the one hand, is connected to the control electrode (G) of the transistor (T2) and, on the other hand, is connected to that connection of the servomotor (M) to which also the free-wheel diode is connected.

2. A circuit configuration as claimed in claim 1,
**characterized** in that the duration of the through-connection of the transistor (T2) is predetermined by an ohmic resistor (R2) via which the capacitor (C) discharges itself.

3. A circuit configuration as claimed in claim 2,
**characterized** in that a diode (D2) poled in the charging direction of the capacitor (C) is connected in parallel with the ohmic resistor (R2).

4. A circuit configuration as claimed in one or in several of claims 1 through 3,
**characterized** in that the transistor (T2) connected in parallel with the servomotor (M) is a power MOS-field-effect transistor, the gate of which is actuated via the capacitor (C) upon the appearance of the cutoff voltage (U_{S}).

5. A circuit configuration as claimed in claim 4,
**characterized** in that a Zener diode (D2) connecting the gate with the source protects the transistor (T2) against overvoltages.

6. A circuit configuration as claimed in claim 5,
**characterized** in that the Zener diode (D2) is connected so that, in the non-conducting direction, it serves as overvoltage protection and, in the conducting direction, it carries the charging current of the capacitor (C).

## Revendications

1. Agencement de circuit permettant de limiter la tension de coupure qui se produit dans la commande d'un servomoteur (M) au moyen d'impulsions de courant continu modulées en durée, caractérisé en ce qu'en parallèle au moteur de réglage (M) est connectée ce qu'il est convenu d'appeler une diode de roue libre (D1) en série avec un transistor (T2) qui est commuté brièvement, lors de l'apparition de la tension de coupure, à travers un condensateur (C) qui est relié d'une part à l'électrode de commande (G) du transistor (T2) et d'autre part à la borne du servomoteur (M) à laquelle est raccordée aussi la diode de roue libre.

2. Agencement de circuit selon la revendication 1, caractérisé en ce que la durée de la commutation du transistor (T2) est préfixée au moyen d'une résistance ohmique (R2) à travers laquelle le condensateur (C) se décharge.

3. Agencement de circuit selon la revendication 2, caractérisé en ce qu'en parallèle à la résistance ohmique (R2) est montée une diode Zener (D2), polarisée dans le sens de charge du condensateur (C).

4. Agencement de circuit selon une ou plusieurs des revendications 1 à 3, caractérisé en ce que le transistor (T2) monté en parallèle au servomoteur (M) est un transistor de puissance MOS-FET dont la borne de grille est commandée à travers le condensateur (C) lors de l'apparition de la tension de coupure (Us).

5. Agencement de circuit selon la revendication 4, caractérisé en ce que le transistor (T2) est protégé des surtensions par la diode Zener (D2) qui relie la borne de grille à la borne de source.

6. Agencement de circuit selon la revendication 5, caractérisé en ce que la diode Zener (D2) est montée de façon telle que, dans le sens de blocage, elle sert de protection vis-à-vis des surtensions et, dans le sens passant, elle conduit le courant de charge du condensateur (C).
